# EUROPÄISCHE PATENTSCHRIFT

(11) **EP 1 486 761 B1**
(45) Veröffentlichungstag und Bekanntmachung des Hinweises auf die Patenterteilung: **09.09.2009**
(21) Anmeldenummer: 04102044.7
(22) Anmeldetag: 12.05.2004
(51) Int. Cl.: G01C 21/36

(54) **Navigationsvorrichtung**
Navigation device
Système de navigation

(30) Priorität: 10.06.2003 DE 10326042
(43) Veröffentlichungstag der Anmeldung: 15.12.2004
(73) Patentinhaber: ROBERT BOSCH GMBH, 70442 Stuttgart (DE)
(72) Erfinder: Poechmueller, Werner, 31139 Hildesheim (DE)

(56) Entgegenhaltungen:
- EP-A- 0 580 166
- DE-A1- 10 123 482
- US-B1- 6 285 952

## Beschreibung

### Stand der Technik

Die Erfindung geht aus von einer Navigationsvorrichtung nach der Gattung des Hauptanspruchs. Es sind schon Navigationssysteme bekannt, die in einer Anzeige mittels einer Pfeilsymbolik oder mittels der Darstellung einfacher Kreuzungssymbole Fahrhinweise ausgeben. Hierbei wird einem Fahrer mittels der genannten Symboldarstellung angezeigt, an welcher Stelle er von einer gerade benutzten Straße abbiegen muss oder an welcher Ausfahrt er zum Beispiel einen vor ihm liegenden Kreisverkehr verlassen muss. Ferner sind akustische Ansagen bekannt, mittels denen ein Fahrer auf einen durchzuführenden Abbiegevorgang hingewiesen wird, zum Beispiel "in 300 Metern rechts abbiegen" oder "jetzt abbiegen". Ferner sind Navigationsvorrichtungen bekannt, in denen in einer meist farbfähigen, hochauflösenden Anzeige dem Fahrer eine Kartenansicht geboten wird, in der eine Straßenkarte oder eine Umgebung des Fahrzeugs in Aufsicht oder aus schräg erhöhtem Blick auf eine Ebene dargestellt wird. In der Karte wird die Position des Fahrzeugs eingetragen und in Bezug auf den Straßenverlauf dargestellt. Es ist auch bekannt, die genannten Anzeigen gegebenenfalls in beliebiger Weise miteinander zu kombinieren. Die Anzeigen können in ihrer Helligkeit und in ihrem Kontrast an Benutzerwünsche angepasst werden. Die akustische Ausgabe verfügt über eine Lautstärkenregelung, mit der ein Benutzer eine ihm genehme Lautstärke einstellen kann. Will ein Benutzer die Ausgabe von Fahrhinweisen jedoch ganz abstellen, so muss er die Navigationsvorrichtung komplett abstellen. Möchte er dann erneut Wegehinweise ausgegeben erhalten, muss er die Navigationsvorrichtung neu starten und das Fahrziel erneut eingeben. Wegehinweise und gegebenenfalls eine Fahrtroute müssen dabei erneut berechnet werden. Gegebenenfalls ist ein Speicher vorgesehen, in dem ein zuletzt eingegebenes Ziel abgelegt ist. Wählt ein Benutzer dieses Ziel aus, so muss die Fahrtroute zu dem ausgewählten Ziel jedoch ebenfalls erneut berechnet werden.

Aus der DE 101 23 482 A1 ist ein Verfahren und eine Vorrichtung zur Zielführung eines Kraftfahrzeugs bekannt, bei dem in einer Verarbeitungseinrichtung nach Angabe eines Zielortes eine Fahrtroute von einem Startpunkt zu einem angegebenen Zielpunkt ermittelt wird und von mindestens einer Ausgabeeinrichtung Zielführungshinweise ausgegeben werden. Hierbei ist es vorgesehen, dass bei einer definierten Kennzeichnung der ermittelten Fahrtroute eine Ausgabe von Zielführungshinweisen im wesentlichen nur dann erfolgt, wenn die ermittelten Fahrtroute von dem Kraftfahrzeug verlassen wird und/oder eine Verarbeitungseinrichtung eine eine Verkehrsbehinderung kennzeichnende Verkehrsinformation erhält, die die ermittelte Fahrtroute betrifft.

### Vorteile der Erfindung

Die erfindungsgemäße Navigationsvorrichtung mit den Merkmalen des Hauptanspruchs hat demgegenüber den Vorteil, dass ein Fahrer auf einfache Weise die Ausgabe von Wegehinweisen über mindestens ein Ausgabemittel abschalten kann, während der Betrieb der Navigationsvorrichtung im Hintergrund so fortgeführt wird, dass ein nach einer erneuten Aktivierung anstehender Fahrhinweis unmittelbar ausgegeben werden kann. Eine erneute Eingabe eines Fahrziels oder eine Routenberechnung kann hierdurch entfallen. Auch ist ein Benutzer nicht darauf angewiesen, zum Beispiel einen Bildschirm dunkel zu schalten oder eine für ihn angenehm eingestellte Lautstärke niedrig zu regeln, so dass er auf einen meist recht aufwändigen, von dem Benutzer vorzunehmenden, Regelvorgang der Ausgabevorrichtungen auf für ihn angenehme Einstellgrößen verzichten kann. Somit kann ein Benutzer Wegehinweise unterdrücken, die ihm zum Beispiel für eine ihm bekannte Strecke ausgegeben werden und auf die er nicht angewiesen ist. Eine Störung eines Benutzers durch die Ausgabe von für ihn nicht erforderlichen Wegehinweisen wird hierdurch vermieden.

Durch die nachfolgende, einfache Aktivierung werden einem Benutzer jedoch zeitnah gewünschte Wegehinweise zur Verfügung gestellt, z. B. wenn er einen ihm bekannten Straßennetzbereich verlässt. Damit kann insbesondere vermieden werden, dass ein Fahrziel erst während der Fahrt eingegeben werden muss. Oftmals wird dabei der Fall auftreten, dass ein Benutzer der Navigationsvorrichtung nur auf einem kleinen Teil der Route, in der Regel in einer kleinen Region um das Zielgebiet herum, eine Zielführung in der Form einer Ausgabe von Wegehinweisen wünscht. Mit der erfindungsgemäßen Navigationsvorrichtung kann ein derartiger Betrieb so eingestellt werden, dass einem Benutzer keine Wegehinweise ausgegeben werden, bis er sein Zielgebiet erreicht, so dass zum Beispiel bei einer akustischen Ausgabe von Fahrhinweisen in einem Fahrzeug schlafende Passagiere nicht geweckt werden. Wird das Zielgebiet erreicht, stehen unmittelbar nach der Aktivierung entsprechende Wegehinweise zum Ziel zur Verfügung.

Durch die in den Unteransprüchen aufgeführten Maßnahmen sind vorteilhafte Weiterbildungen und Verbesserungen der im Hauptanspruch angegebenen Navigationsvorrichtung möglich. Besonders vorteilhaft ist, eine Taste zur Deaktivierung und zur erneuten Aktivierung der Ausgabe von Wegehinweisen vorzusehen. Hierdurch sind für einen Benutzer die Aktivierung und Deaktivierung auf einfache Weise möglich. Ferner ist es vorteilhaft, die Navigationsvorrichtung mit einer Ortungseinheit zur Positionsbestimmung zu versehen und insbesondere bei einer Abweichung der aktuellen Position von einer zuvor berechneten Wegstrecke einen entsprechenden Wegehinweis und gegebenenfalls eine Warnmeldung auszugeben, die auf ein Verlassen der zuvor berechneten Route hinweist, um den Benutzer auf ein Verlassen der von der Navigationsvorrichtung zuvor berechneten Fahrtroute hinzuweisen. Biegt ein Benutzer also zum Beispiel an einer Kreuzung irrtümlich ab, so kann er erfmdungsgemäß automatisch auf die damit verlassene Fahrtroute zurückgeführt werden, ohne dass er eine Ausgabe von Wegehinweise aktivieren muss. Gegebenenfalls wird er auf einen von ihm geplanten, ungünstigeren Fahrweg hingewiesen bzw. auf ein falsches Abbiegen aufmerksam gemacht.

Ferner ist es vorteilhaft, Verkehrsinformationen zu empfangen und eine zuvor berechnete Fahrtroute anhand der empfangenen Verkehrsinformationen gegebenenfalls zu korrigieren. Ist dies der Fall, so wird ein Benutzer auch bei deaktivierten Fahrhinweisen automatisch auf eine von ihm vorzunehmende, durch die aktuelle Verkehrssituation vorgegebene Fahrtroutenänderung hingewiesen, indem die Ausgabe von Wegehinweisen automatisch wieder aktiviert wird. Selbst wenn ein Benutzer die Ausgabe von Wegehinweisen deaktiviert hat, kann er somit über aktuell erforderliche Wegstreckenänderungen informiert werden. Erfindungsgemäß ist eine Aktivierung erst kurz vor einer Stelle der Wegstrecke vorgesehen, an der ein Benutzer die zuvor geplante Wegstrecke verlassen muss, so dass die unnötige Ausgabe von Wegehinweisen vermieden wird.

Es ist ferner vorteilhaft, einen Benutzer durch eine geeignete optische Darstellung, insbesondere durch die Darstellung eines entsprechenden Symbols, in einer Anzeigeeinheit darauf hinzuweisen, dass die Ausgabe von Wegehinweisen derzeit deaktiviert ist. Hierdurch wird ein Benutzer darüber informiert, dass er durch eine entsprechende Aktivierung sofort Wegehinweise angezeigt oder anderweitig ausgegeben bekommen kann. In Kombination mit einer automatischen Aktivierung von Wegehinweisen, wenn die geplante Fahrstrecke nicht mit der aktuellen Fahrstrecke übereinstimmt, erhält er durch diese Anzeige vorteilhaft zudem eine Information darüber, ob er sich noch auf der richtigen, ursprünglich geplanten und vorzugsweise von der Navigationsvorrichtung berechneten Fahrstrecke befindet.

Ferner ist vorteilhaft, bei einer Betätigung der zweiten Einstelleinheit für den Fall, dass gar keine Wegehinweise zur Ausgabe anstehen, einen Benutzer darauf hinzuweisen. Er kann dann gegebenenfalls ein von ihm gewünschtes Fahrziel zur Berechnung einer Fahrtroute zu diesem Fahrziel eingeben.

### Zeichnung

Ausführungsbeispiele der Erfindung sind in der Zeichnung dargestellt und in der nachfolgenden Beschreibung näher erläutert.

Es zeigen
- Figur 1: eine schematische Darstellung einer erfindungsgemäßen Navigationsvorrichtung,
- Figur 2: ein erfindungsgemäßes Verfahren zum Betrieb einer erfindungsgemäßen Navigationsvorrichtung.

### Beschreibung des Ausführungsbeispiels

Die erfindungsgemäße Navigationsvorrichtung kann zur Benutzung mit verschiedenen Verkehrsmitteln verwendet werden. Sie kann zum Beispiel für einen Fußgänger und/oder für die Benutzung eines Fahrzeugs und/oder für die Benutzung öffentlicher Verkehrsmittel verwendet werden. Insbesondere ist die Benutzung in Fahrzeugen sinnvoll, die sich in einem Straßennetz bewegen und bei denen ein Fahrer das Fahrzeug selber steuert, so zum Beispiel bei Kraftfahrzeugen. Denn in diesem Fall ist der Fahrer durch das Fahren selbst in besonderer Weise gefordert und muss sich auf den Fahrvorgang konzentrieren. Eine höhere Konzentration des Fahrers kann dabei dadurch erreicht werden, dass er einerseits nicht durch unnötige Wegehinweise gestört wird und er andererseits auf einfache Weise von ihm gewünschte Wegehinweise anfordern kann. Daher ist die vorliegende Erfindung im Nachfolgenden anhand einer Navigationsvorrichtung für ein Kraftfahrzeug erläutert.

Während im Allgemeinen Wegehinweise auch zum Beispiel Hinweise für die Benutzung eines öffentlichen Verkehrsmittels sein können, werden Wegehinweise im Folgenden als Fahrhinweise verstanden, mit denen einem Fahrer eines Kraftfahrzeugs angezeigt wird, ob er der vorliegenden Straße folgen muss oder ob er gegebenenfalls die Straße an einer folgenden Kreuzung verlassen muss. Darüber hinaus können gegebenenfalls auch weitere Verkehrshinweise gegeben werden, wie zum Beispiel das Einordnen in eine Fahrspur, die Benutzung einer Fähre oder das Parken auf einem bestimmten Parkplatz.

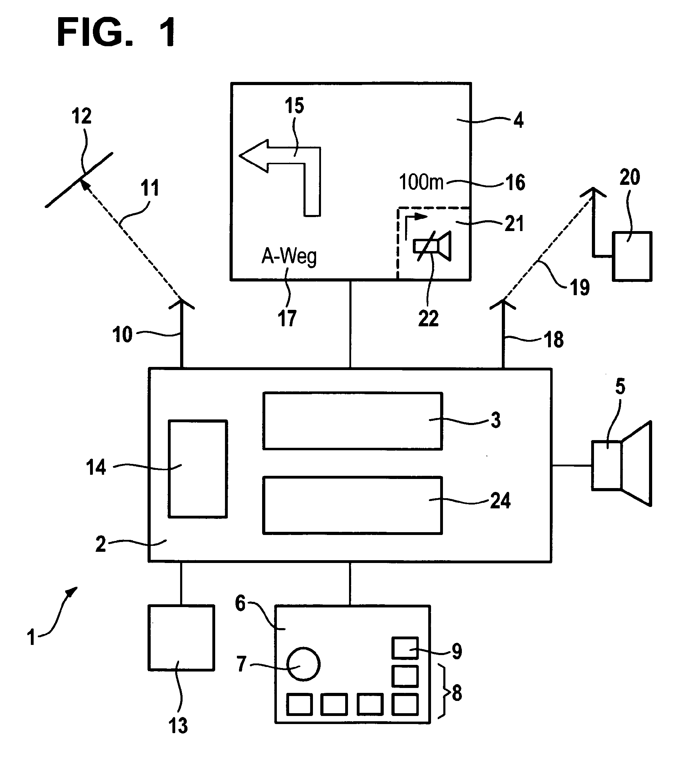

In der Figur 1 ist eine erfindungsgemäße Navigationsvorrichtung 1 dargestellt, die bevorzugt in ein Kraftfahrzeug eingebaut ist. Die Navigationsvorrichtung 1 weist eine Zentraleinheit 2 auf, die über eine Recheneinheit 3 zur Steuerung der Navigationsvorrichtung 1 verfügt. An die Zentraleinheit 2 ist eine Anzeige 4 angeschlossen, in der Fahrhinweise optisch ausgegeben werden. Ferner ist an die Zentraleinheit 2 ein Lautsprecher 5 angeschlossen, über den Fahrhinweise akustisch ausgegeben werden. In einer bevorzugten Ausführungsform ist der Lautsprecher 5 der Lautsprecher eines Autoradios, das in einer weiteren bevorzugten Ausführungsart in die Navigationsvorrichtung 1 integriert ist. Ferner können auch weitere Ausgabemittel, zum Beispiel in Form von haptischen, fühlbaren Ausgabeformen, zum Beispiel mittels einer motorischen Vibration des Lenkrades, vorgesehen sein, die in der Figur 1 jedoch nicht dargestellt sind. Zur Steuerung der Navigationsvorrichtung 1 ist eine Bedieneinheit 6 an die Zentraleinheit 2 angeschlossen. In der hier dargestellten Ausführungsform weist die Bedieneinheit 6 einen Drehregler 7, Bedientasten 8 zur Fahrzieleingabe und zur Steuerung der Navigationsvorrichtung 1 sowie eine Bedientaste 9 zur Deaktivierung und Aktivierung der Fahrhinweisausgabe auf. Der Drehregler 7 ist dabei als eine erste Einstelleinheit zur Lautstärkenregelung der Navigationsvorrichtung 1 vorgesehen. Die Bedientaste 9 ist eine zweite Einstelleinheit, die zur vorübergehenden Abschaltung der Fahrhinweisausgabe dient und die vorzugsweise als eine Drucktaste ausgeführt ist. In einer in der Figur 1 nicht dargestellten Ausführungsform kann die Navigationsvorrichtung 1 auch über eine in der Figur nicht gezeigte Spracheingabeeinheit gesteuert werden. Eine Deaktivierung bzw. Aktivierung der Ausgabe von Fahrhinweisen erfolgt dann über einen entsprechenden, gesprochenen Steuerbefehl.

Über die Bedientasten 8 wird ein Fahrziel in die Navigationsvorrichtung 1 eingegeben. An die Zentraleinheit 2 ist eine Ortungseinheit 10 angeschlossen, die in einer bevorzugten Ausführungsform als eine Satellitenortungseinheit ausgeführt ist. Über eine Satellitenverbindung 11 zu Satelliten 12 wird eine Positionsbestimmung der Navigationsvorrichtung 1 bzw. des Fahrzeugs durchgeführt, in dem die Navigationsvorrichtung 1 montiert ist. Gegebenenfalls können zur Unterstützung der Ortsbestimmung mittels der Ortungseinheit 10 Fahrzeugsensoren 13 ausgewertet werden, die zur Verifizierung der ermittelten Position dienen. Gegebenenfalls können die Daten der Fahrzeugsensoren 13 auch dann verwendet werden, wenn eine Satellitenverbindung 11 nicht zustande kommt. Aus der somit bestimmten aktuellen Fahrzeugposition und dem eingegebenen Fahrziel bestimmt die Recheneinheit 3 unter Rückgriff auf einen Datenspeicher 24, in dem ein Straßenwegenetz abgelegt ist, eine Fahrtroute von der aktuellen Fahrzeugposition zu dem Fahrziel. In Abhängigkeit von der berechneten Fahrtroute werden Fahrhinweise festgelegt, die über die Anzeige 4 bzw. den Lautsprecher 5 in einem vorgebbaren Abstand vor dem Ort einer durchzuführenden Fahrhandlung ausgegeben werden. Zum Beispiel können Abbiegehinweise auf Kreuzungen, an denen das Fahrzeug eine gerade benutzte Straße durch Abbiegen verlassen muss, 300 Meter vor der Kreuzung ausgegeben werden. Dieser Abstand kann geschwindigkeits- und/oder straßenklassenabhängig gewählt werden. Daten, aus denen die Fahrhinweise erstellt werden, zum Beispiel also grafische Daten oder Audiodaten, sind in einem Speicher 14 in der Zentraleinheit 2 abgelegt. In dem hier dargestellten Ausführungsbeispiel ist in der Anzeige 4 mittels einer Pfeilgrafik 15 ein Abbiegen nach links in einem Abstand von 100 Metern dargestellt. Der Abstand ist mit einer entsprechenden Abstandsangabe 16 in die Anzeige 4 eingetragen. Ferner ist ein Straßenname 17 angegeben, der den Namen der Straße anzeigt, in die der Fahrer einbiegen soll.

Die Zentraleinheit 2 verfügt ferner über eine Empfangseinheit 18, die Funksignale einer Dienstezentrale 20 empfangen kann. In einem ersten Ausführungsbeispiel ist die Funkverbindung 19 als ein Rundfunksignal ausgeführt, wobei die Dienstezentrale 20 eine Rundfunkstation ist. Über die Empfangseinheit 18 werden in diesem Fall über die Rundfunkverbindung übermittelte Verkehrsinformationen von der Navigationsvorrichtung 1 empfangen. Die Verkehrsinformationen werden zum Beispiel über einen gesonderten Verkehrsdatenkanal, zum Beispiel über TMC (Traffic Message Channel) an die Navigationsvorrichtung 1 übertragen. In einem weiteren Ausführungsbeispiel kann die Funkverbindung 19 auch als eine Mobilfunkverbindung ausgeführt sein, so dass Daten unmittelbar von einer an ein Telefonnetz angeschlossenen Dienstezentrale 20 über die Mobilfunkverbindung 19 an die Navigationsvorrichtung 1 übertragen werden können. Die empfangenen Verkehrsinformationen werden von der Recheneinheit 3 bei der Berechnung der Fahrtroute berücksichtigt. Insbesondere werden gesperrte Straßenstücke oder durch einen Verkehrsstau nur schwer passierbare Straßenstücke bei der Routenberechnung vermieden, so dass der Fahrer mittels der ausgegebenen Fahrhinweise möglichst entlang einer Fahrstrecke geführt wird, für die er weniger Zeit benötigt, als über andere mögliche Strecken. Treffen während eines Fahrens entlang der Fahrstrecke neue Verkehrsmeldungen ein, so prüft die Recheneinheit 3, ob die neu eingetroffenen Verkehrsmeldungen das noch zu fahrende Reststück der Fahrtroute betreffen. Ist dies der Fall, so wird eine Neuberechnung der Fahrtroute von der aktuell erreichten Fahrzeugposition zu dem eingegebenen Fahrziel durchgeführt. Ergibt sich infolgedessen eine andere Fahrtroute als zuvor berechnet, so wird die Ausgabe von Fahrhinweisen entsprechend an die neue Fahrtroute angepasst. Gegebenenfalls kann ein Fahrer über die Anzeige 4 auch darauf hingewiesen werden, ob entsprechende, aktuelle Verkehrsmeldungen vorliegen.

In einer weiteren Ausführungsform kann eine Berechnung einer Fahrtroute auch in der Dienstezentrale 20 erfolgen, wobei die Fahrtroute von der Dienstezentrale 20 an die Navigationsvorrichtung 1 zur Ausgabe von Fahrhinweisen übermittelt wird.

Hat ein Fahrer das Fahrziel eingegeben, so kann er, bis er das Fahrziel erreicht hat, durch eine Betätigung der Bedientaste 9 die Ausgabe von Fahrhinweisen abschalten. In einer ersten Ausführungsform wird sowohl die Ausgabe von Fahrhinweisen über die Anzeige 4, als auch die Ausgabe von Fahrhinweisen über den Lautsprecher 5 hierdurch deaktiviert. In weiteren Ausführungsformen ist es jedoch auch möglich, nur die optische Ausgabe von Fahrhinweisen mittels der Anzeige 4 oder nur die akustische Ausgabe von Fahrhinweisen mittels dem Lautsprecher 5 zu deaktivieren. In einer ersten Ausführungsform ist die Bedientaste 9 hierzu als ein Schalter zwischen zwei Zuständen, nämlich zwischen einer Aktivierung und einer Deaktivierung aller Ausgabemittel vorgesehen. In einer weiteren Ausführungsform kann sie jedoch auch durch mehrmaliges Betätigen zwischen einer Aktivierung der optischen, einer Aktivierung der akustischen, einer Aktivierung beider Ausgabemittel und/oder einer Deaktivierung aller Ausgabemittel umschalten. Ein Abschalten der Ausgabe von Fahrhinweisen ist dabei unabhängig zum Beispiel von einer über den Drehregler 7 eingestellten Lautstärke der akustischen Ausgabe über den Lautsprecher 5. In einer bevorzugten Ausführungsform ist der Drehregler 7 auch dazu vorgesehen, eine Lautstärke der Ausgabe eines Autoradios zu regeln. Soll die Ausgabe von Fahrhinweisen deaktiviert werden, kann der Drehregler 7 zur Lautstärkenregelung hierzu unverändert bleiben, sodass eine Audioausgabe des Radios ebenfalls unverändert fortgeführt wird.

Solange die Ausgabe von Fahrhinweisen deaktiviert wird, wird dennoch die Verfolgung der zurückgelegten Fahrstrecke durch die Recheneinheit 3 fortgeführt. Hierzu vergleicht die Recheneinheit 3 eine mittels der Ortungseinheit 10 jeweils aktuell bestimmte Fahrzeugposition mit der zurückgelegten Fahrtroute. Hierbei wird überprüft, ob sich das Fahrzeug noch auf der Fahrtroute befindet und zu welchem Zeitpunkt ein nächster Fahrhinweis ausgegeben werden sollte. So lange die Ausgabe von Fahrhinweisen unterdrückt wird, erfolgt keine solche Ausgabe bzw. für den Fall, dass nur ein Ausgabemittel deaktiviert wurde, erfolgt keine Ausgabe über das deaktivierte Ausgabemittel. Bei einer Aktivierung kann jedoch entweder sofort nach der Aktivierung oder zum Ausgabezeitpunkt eines nächsten, nach der Aktivierung anstehenden Fahrhinweises der entsprechende Fahrhinweis wieder ausgegeben werden.

Eine erneute Aktivierung kann in einem ersten Ausführungsbeispiel darüber erfolgen, dass die Bedientaste 9 erneut betätigt wird. Ergänzend oder alternativ dazu, kann eine Aktivierung auch automatisch erfolgen. In einem ersten Ausführungsbeispiel erfolgt die Aktivierung dann, wenn auf Grund der Verkehrsinformationen, die über die Empfangseinheit 18 erhalten werden, eine neue Fahrtroute festgelegt wurde. Sobald ein Fahrer nun die zunächst berechnete Fahrtroute verlassen muss bzw. wenn ein Fahrer die neu berechnete Fahrtroute verlässt, so werden dem Fahrer in einer bevorzugten Ausführungsform auch dann Fahrhinweise ausgegeben, wenn er die Ausgabe von Fahrhinweisen zuvor deaktiviert hatte. Damit wird der Fahrer automatisch auf die neue Wegstrecke geführt. Ergänzend oder alternativ hierzu können in einem weiteren Ausführungsbeispiel auch dann entsprechende Hinweise an einen Fahrer ausgegeben werden, wenn er selbständig die zuvor berechnete Fahrtroute zu dem eingegebenen Fahrziel verlässt. Die Ausgabe von Fahrhinweisen ist in diesem Fall bevorzugt so gestaltet, dass der Fahrer auf die von ihm verlassene, zuvor berechnete Fahrtroute zurück geführt wird. Bevorzugt erfolgt ergänzend ein Hinweis darauf, dass die zuvor berechnete Fahrtroute verlassen wurde, entweder durch eine entsprechende akustische Ausgabe "Sie haben die berechnete Fahrtroute verlassen!" oder eine entsprechende grafische Anzeige in der Anzeige 4.

Um den Fahrer darauf hinzuweisen, dass er zum Beispiel derzeit keine akustischen Fahrhinweise erhält, obwohl diese aktuell zur Verfügung stehen, ist gemäß dem Ausführungsbeispiel in Figur 1 in der Anzeige 4 in einem Symbolfeld 21 ein entsprechendes Symbol 22 dargestellt, das den Fahrer auf eine Deaktivierung der akustischen Ausgabe von Fahrhinweisen hinweist. In einer bevorzugten Ausführungsform ist das Symbol 22 dabei so gestaltet, dass für den Fahrer erkennbar ist, ob er sich noch auf der zuvor berechneten Fahrtroute befindet. Hierzu kann das Symbol 22 zum Beispiel in grün angezeigt werden, wenn sich das Fahrzeug noch auf der berechneten Fahrtroute befindet. Falls dies nicht der Fall ist, erfolgt eine Anzeige in rot. Ein entsprechendes Symbol kann auch bei einer Deaktivierung einer optischen Zielführung angezeigt werden.

Ist die Bedientaste 9 als eine Taste zum Aktivieren und Deaktivieren von Fahrhinweisen ausgeführt und liegt bei ihrer Betätigung keine berechnete Fahrtroute vor, so erfolgt zum Beispiel eine akustische Ausgabe "Zielführung nicht aktiv, bitte Ziel und/oder Fahrtroute eingeben und Zielführung starten". Ist die Ausgabe von Fahrhinweisen aktiviert und wird die Bedientaste 9 betätigt, so erfolgt vor dem endgültigen Abschalten einer akustischen und/oder optischen Ausgabe bevorzugt ein optischer und/oder akustischer Hinweis "Zielführungshinweis-Ausgabe deaktiviert". Eine entsprechende Bestätigung wird für den Fall ausgegeben, wenn ein Fahrer die Ausgabe von Fahrhinweisen wieder aktiviert hat.

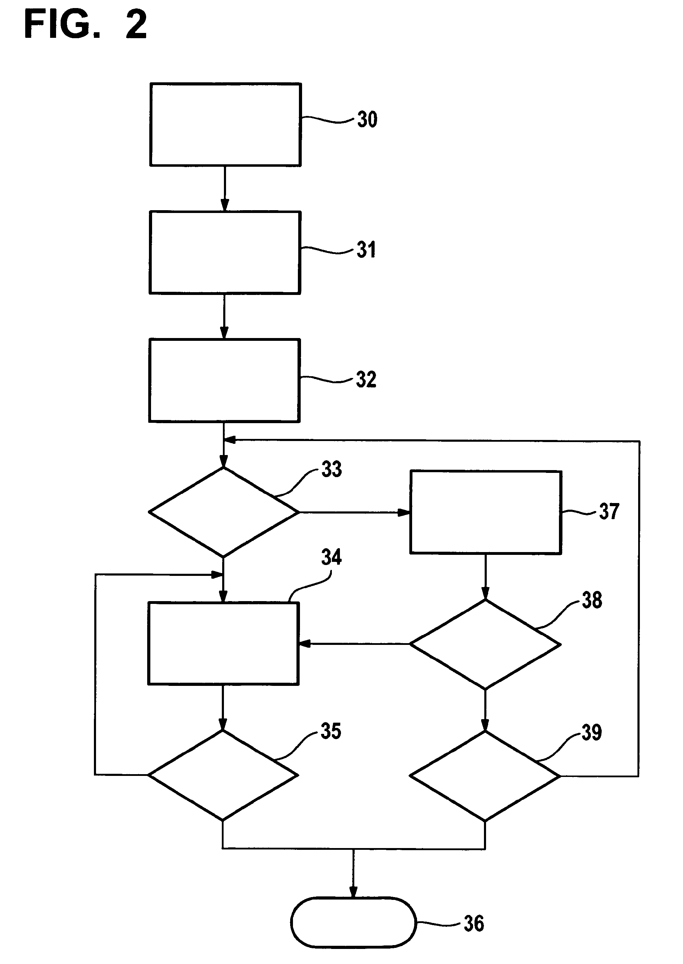

In der Figur 2 ist ein Ablauf eines erfindungsgemäßen Verfahrens zum Betrieb der erfindungsgemäßen Navigationsvorrichtung dargestellt. In einem Initialisierungsschritt 30 wird die Navigationsvorrichtung aktiviert. In einem nachfolgenden Eingabeschritt 31 gibt ein Benutzer ein Fahrziel in die Navigationsvorrichtung 1 ein. Hieran schließt sich ein Routenberechnungsschritt 32 an, in dem die Navigationsvorrichtung 1 eine optimale Fahrtroute von einer Startposition zu einem eingegebenen Fahrziel berechnet. Ferner werden vorzugsweise bereits zu diesem Zeitpunkt Positionen von auszugebenden Fahrhinweisen und die jeweils an diesen Positionen auszugebenden Fahrhinweise bestimmt.

Nach dem Routenberechnungsschritt 32 beginnt der Fahrer seine Fahrt und wird dabei durch die Ausgabe von Fahrhinweisen von der Navigationsvorrichtung 1 unterstützt. In einem ersten Prüfschritt 33 wird dabei überprüft, in welchem Ausgabemodus sich die Navigationsvorrichtung 1 befindet. Wird in dem ersten Prüfschritt ermittelt, dass eine Ausgabe von Fahrhinweisen erfolgen soll, so wird zu einem Ausgabe- und Ermittlungsschritt 34 verzweigt, in dem die aktuelle Position mit der zuvor berechneten Fahrtroute verglichen wird. Wird der Route gefolgt, so wird entsprechend der nächste Fahrhinweis ausgegeben. Wird festgestellt, dass der Route nicht gefolgt wird bzw. dass sich eine Routenänderung ergeben hat, so wird ein entsprechender Hinweis an den Fahrer des Fahrzeugs ausgegeben. Zu einem geeigneten Zeitpunkt, zum Beispiel vor einem Abbiegen vor einer Kreuzung, wird nun ein entsprechender Fahrhinweis ausgegeben. In einem nachfolgenden zweiten Prüfschritt 35 wird überprüft, ob das Fahrziel erreicht worden ist. Ist dies der Fall, so wird in einem Endschritt 36 das Verfahren beendet. Zu dem Endschritt 36 wird auch dann verzweigt, wenn die Zielführung durch eine Deaktivierung der Navigationsvorrichtung 1 abgebrochen wird. Wird in dem zweiten Prüfschritt 35 ermittelt, dass das Fahrziel noch nicht erreicht wurde, so wird zu dem ersten Prüfschritt 33 zurückverzweigt. Wird in dem ersten Prüfschritt 33 ermittelt, dass eine Ausgabe von Fahrhinweisen nicht gewünscht ist, so wird zu einem Fortfuhrungsschritt 37 verzweigt, in dem die aktuelle Position ermittelt und mit der zuvor berechneten Fahrtroute verglichen wird. Wird in einem nachfolgenden dritten Prüfschritt 38 ermittelt, dass die zuvor berechnete Fahrtroute verlassen wurde, oder dass in Folge einer eingegangenen Verkehrsmeldung sich die zu fahrende Fahrtroute verändert hat, so wird ausgehend von dem dritten Prüfschritt 38 zu dem Ausgabe- und Ermittlungsschritt 34 verzweigt. Es erfolgt ein entsprechender Hinweis auf ein Verlassen der Fahrtroute. Wird in dem dritten Prüfschritt ermittelt, dass kein Verlassen der ursprünglichen geplanten Fahrtroute vorliegt, so wird zu einem vierten Prüfschritt 39 verzweigt, in dem geprüft wird, ob das Ziel erreicht wurde. Ist dies der Fall, so wird das Verfahren in dem Endschritt 36 beendet. Ist dies nicht der Fall, so wird zu dem ersten Prüfschritt 33 zurückverzweigt.

## Patentansprüche

1. Navigationsvorrichtung (1) mit mindestens einem Ausgabemittel (4,5) zur Ausgabe von Wegehinweisen zur Führung zu einem Ziel, mit einer ersten Einstelleinheit zur Regelung der Ausgabe der Wegehinweise über das mindestens eine Ausgabemittel, mit einer zweiten Einstelleinheit (9) zur Deaktivierung der Ausgabe von Wegehinweisen über das mindestens eine Ausgabemittel derart, dass die Ausgabe nachfolgender Wegehinweise über das mindestens eine Ausgabemittel (4, 5) bis zu einer erneuten Aktivierung zur Fortführung der Ausgabe dann anstehender Wegehinweise (15) deaktiviert ist, und mit einer Empfangseinheit (18) zum Empfangen von Verkehrsinformationen, wobei die Ausgabe von Wegehinweisen nach einer Deaktivierung wieder aktiviert wird, wenn die Navigationsvorrichtung in Abhängigkeit von den empfangenen Verkehrsinformationen eine Abweichung einer zu benutzenden Wegstrecke von einer zuvor berechneten Wegstrecke ermittelt, **dadurch gekennzeichnet, dass** eine Aktivierung erst an einer Stelle der Wegstrecke erfolgt, an der die Abweichung von der zuvor berechneten Wegstrecke bevorsteht.

2. Navigationsvorrichtung nach Anspruch 1, **dadurch gekennzeichnet, dass** die zweite Einstelleinheit eine Taste (9) zur Deaktivierung und zur erneuten Aktivierung der Ausgabe der Wegehinweise (15) ist.

3. Navigationsvorrichtung nach einem der vorherigen Ansprüche, **gekennzeichnet durch** eine Ortungseinheit (10) zur Bestimmung einer Position der Navigationsvorrichtung.

4. Navigationsvorrichtung nach Anspruch 3, **dadurch gekennzeichnet, dass** die Ausgabe von Wegehinweisen nach einer Deaktivierung wieder aktiviert wird, wenn eine Abweichung zwischen der aktuellen Position der Navigationsvorrichtung und einer zuvor berechneten Wegstrecke ermittelt wird.

5. Navigationsvorrichtung nach einem der vorherigen Ansprüche, **gekennzeichnet durch** eine Anzeige (4) zur optischen Darstellung eines Hinweises (22) auf eine Deaktivierung einer Ausgabe von Wegehinweisen.

6. Verfahren zur Navigation zu einem Ziel, wobei Wegehinweise (15) zur Führung zu dem Ziel über mindestens ein Ausgabemittel (4,5) ausgegeben werden, wobei eine Ausgabe der Wegehinweise über das mindestens eine Ausgabemittel mit einer ersten Einstelleinheit geregelt wird und wobei mit einer zweiten Einstelleinheit (9) eine Ausgabe von Wegehinweisen über das mindestens eine Ausgabemittel derart deaktivierbar ist, dass die Ausgabe folgender Wegehinweise über das mindestens eine Ausgabemittel bis zu einer erneuten Aktivierung deaktiviert wird, wobei über eine Empfangseinheit (18) Verkehrsinformationen empfangen werden, wobei die Ausgabe von Wegehinweisen nach einer Deaktivierung wieder aktiviert wird, wenn die Navigationsvorrichtung in Abhängigkeit von den empfangenen Verkehrsinformationen eine Abweichung einer zu benutzenden Wegstrecke von einer zuvor berechneten Wegstrecke ermittelt, **dadurch gekennzeichnet, dass** eine Aktivierung erst an einer Stelle der Wegstrecke erfolgt, an der die Abweichung von der zuvor berechneten Wegstrecke bevorsteht.

7. Verfahren nach Anspruch 6, **dadurch gekennzeichnet, dass** eine Bestimmung eines nächsten auszugebenden Wegehinweises (15) während einer Deaktivierung der Ausgabe der Wegehinweise fortgeführt wird.

8. Verfahren nach einem der Ansprüche 6-7, **dadurch gekennzeichnet, dass** eine Meldung (22) ausgegeben wird, wenn die zweite Einstelleinheit (9) betätigt wird und keine Wegehinweise (15) zur Ausgabe anstehen.

## Claims

1. Navigation apparatus (1) having at least one output means (4, 5) for the output of route advice for guidance to a destination, having a first adjusting unit for regulating the output of the route advice via the at least one output means, having a second adjusting unit (9) for deactivating the output of route advice via the at least one output means such that the output of subsequent route advice via the at least one output means (4, 5) is deactivated until reactivation for the purpose of continuing the output of then pending route advice (15), and having a reception unit (18) for receiving traffic information, wherein the output of route advice is reactivated following deactivation if the navigation apparatus ascertains, on the basis of the received traffic information, a discrepancy between a road which is to be used and a previously calculated road, **characterized in that** activation is not effected until at a point on the road at which the discrepancy from the previously calculated road is imminent.

2. Navigation apparatus according to Claim 1, **characterized in that** the second adjusting unit is a key (9) for deactivating and reactivating the output of the route advice (15).

3. Navigation apparatus according to one of the preceding claims, **characterized by** a position-finding unit (10) for determining a position for the navigation apparatus.

4. Navigation apparatus according to Claim 3, **characterized in that** the output of route advice is reactivated following deactivation if a discrepancy is ascertained between the current position of the navigation apparatus and a previously calculated road.

5. Navigation apparatus according to one of the preceding claims, **characterized by** a display (4) for visually presenting advice (22) of deactivation of output of route advice.

6. Method for navigating to a destination, wherein route advice (15) for guidance to the destination is output via at least one output means (4, 5), wherein output of the route advice via the at least one output means is regulated using a first adjusting unit and wherein a second adjusting unit (9) can be used to deactivate output of route advice via the at least one output means such that the output of subsequent route advice via the at least one output means is deactivated until reactivation, wherein a reception unit (18) is used to receive traffic information, wherein the output of route advice is reactivated following deactivation if the navigation apparatus takes the received traffic information as a basis for ascertaining a discrepancy between a road which is to be used and a previously calculated road, **characterized in that** activation is not effected until at a point on the road at which the discrepancy from the previously calculated road is imminent.

7. Method according to Claim 6, **characterized in that** determination of subsequent route advice (15) which is to be output is continued during deactivation of the output of the route advice.

8. Method according to one of Claims 6-7, **characterized in that** a message (22) is output if the second adjusting unit (9) is operated and there is no route advice (15) pending for output.

## Revendications

1. Dispositif de navigation (1) qui présente au moins un moyen de présentation (4, 5) qui délivre des indications d'itinéraire pour le guidage vers une destination ainsi qu'une première unité de réglage qui règle la présentation des indications d'itinéraire par au moins un moyen de présentation, une deuxième unité de réglage (9) qui désactive la présentation des indications d'itinéraire par le ou les moyens de présentation de telle sorte que la présentation des indications d'itinéraire suivantes par le ou les moyens de présentation (4, 5) soit désactivée jusqu'à une nouvelle activation pour poursuivre la présentation des indications d'itinéraire (15) nécessaires à ce moment, et une unité de réception (18) qui reçoit des informations sur le trafic, la présentation d'indications d'itinéraire étant réactivée après une désactivation lorsque le dispositif de navigation détermine en fonction des informations reçues sur le trafic qu'il existe un écart entre une portion d'itinéraire à utiliser et une portion d'itinéraire calculée précédemment,
**caractérisé en ce que**
l'activation n'a pas lieu tant que le véhicule n'est pas situé en un emplacement de la portion d'itinéraire auquel il existe un risque d'écart par rapport à la portion d'itinéraire calculée précédemment.

2. Dispositif de navigation selon la revendication 1, **caractérisé en ce que** la deuxième unité de réglage est une touche (9) de désactivation et de réactivation de la présentation des indications d'itinéraire (15).

3. Dispositif de navigation selon l'une des revendications précédentes, **caractérisé par** une unité de localisation (10) qui détermine la position du dispositif de navigation.

4. Dispositif de navigation selon la revendication 3, **caractérisé en ce que** la présentation d'indications d'itinéraire est réactivée après une désactivation lorsque la présence d'un écart entre la position effective du dispositif de navigation et une portion d'itinéraire calculée précédemment a été déterminée.

5. Dispositif de navigation selon l'une des revendications précédentes, **caractérisé par** un affichage (4) de présentation visuelle d'une indication (22) lors de la désactivation de la présentation d'indications d'itinéraire.

6. Procédé de navigation vers une destination, dans lequel des indications d'itinéraire (15) sont délivrées par au moins un moyen de présentation (4, 5) pour assurer le guidage vers la destination, une présentation des indications d'itinéraire par le ou les moyens de présentation étant réglée par une première unité de réglage et une deuxième unité de réglage (9) pouvant désactiver la présentation d'indications d'itinéraire par le ou les moyens de présentation de telle sorte que la présentation des indications d'itinéraire suivantes par le ou les moyens de présentation soit désactivée jusqu'à une nouvelle activation, des informations sur le trafic étant reçues par l'intermédiaire d'une unité de réception (18), la présentation d'indications d'itinéraire étant de nouveau activée après une désactivation lorsque le dispositif de navigation détermine en fonction des informations sur le trafic qu'il a reçues qu'il existe un écart entre une portion d'itinéraire à utiliser et une portion d'itinéraire calculée précédemment,
**caractérisé en ce que**
l'activation n'a pas lieu tant que le véhicule n'est pas situé en un emplacement de la portion d'itinéraire auquel il existe un risque d'écart par rapport à la portion d'itinéraire calculée précédemment.

7. Procédé selon la revendication 6, **caractérisé en ce que** la détermination d'une indication d'itinéraire (15) à délivrer ensuite est poursuivie pendant la désactivation de la présentation des indications d'itinéraire.

8. Procédé selon l'une des revendications 6 à 7, **caractérisé en ce qu'**un message (22) est délivré lorsque la deuxième unité de réglage (9) est activée et qu'aucune indication d'itinéraire (15) n'est à délivrer.
